Europäisches Patentamt

European Patent Office

Office européen des brevets

(11) Publication number: **0 034 055
B1**

(12) **EUROPEAN PATENT SPECIFICATION**

(45) Date of publication of patent specification: **24.10.84**

(51) Int. Cl.³: **G 11 B 5/09** // H04L25/49

(21) Application number: **81300507.1**

(22) Date of filing: **06.02.81**

(54) Variable window data recovery apparatus and method.

(30) Priority: **06.02.80 US 118882**

(43) Date of publication of application:
**19.08.81 Bulletin 81/33**

(45) Publication of the grant of the patent:
**24.10.84 Bulletin 84/43**

(84) Designated Contracting States:
**CH DE FR GB IT LI NL**

(56) References cited:
US-A-3 684 967
US-A-3 755 798
US-A-3 827 078
US-A-3 922 613
US-A-4 109 236

ELECTRONICS, vol. 52, no. 20, 27-09-1979 New York, US KARMARKAR: "Low-cost m2fm decoder reduces floppy bit shift", pages 127-129
IBM TECHNICAL DISCLOSURE BULLETIN, vol. 15, no. 1, June 1972 New York, US NIELING:

(73) Proprietor: **SPERRY CORPORATION**
**1290, Avenue of the Americas**
**New York, N.Y. 10019 (US)**

(72) Inventor: **Fung, Anthony Kwok**
**16565 Mt. Michaelis Circle**
**Fountain Valley CA 92708 (US)**

(74) Representative: **Orchard, Oliver John**
**JOHN ORCHARD & CO. Staple Inn Buildings**
**North High Holborn**
**London WC1V 7PZ (GB)**

(56) References cited:
"Program controlled digital detection for single track phase-encoded data", pages 187-188
IBM TECHNICAL DISCLOSURE BULLETIN, vol. 20, no. 10, March 1978 New York, US BEIRNE:
"F/2F data separation and encoding", pages 4124-4127
IBM TECHNICAL DISCLOSURE BULLETIN, vol. 17, no. 1, June 1974, New York, US HO and SWENSON: "Clock-phase correction for digital data recording", pages 206-207

Courier Press, Leamington Spa, England.

## Description

This invention gslates to digital data recovery, and particularly to data recovery from digital data storage devices employing serialized data encoding techniques.

There is a need for reliability in recovering digital data from the media of a mass storage device such as a disk drive data stored in a serialized format. Encoded information is generally represented by a sequence of pulses received at a controller, which indicate state transitions registered on the storage medium. Various encoding schemes are known for data storage and retrieval wherein both data and timing information are encoded in a serialized bit stream. Examples are phase modulation (PM), frequency modulation (FM), modified frequency modulation (MFM), and double modified frequency modulation (M²FM). All of these techniques require the synchronization of a master clock with internal clock signals embedded in the data stream. The normal detection technique involves the provision of a signal recovery window to a signal such as a pulse or a transition. Depending upon the encoding scheme, a detected signal can indicate a particular data value or clock synchronization signal.

Heretofore typical data recovery techniques have involved the provision of a date detection window centered on a synchronized timing cell during which a data signal can be expected, and, conversely, the provision of a period between data detection windows, sometimes called a clock detection window. The clock detection window is the complement of the data detection window. It bridges cell timing units and is centered on the transition between adjacent timing units.

There are many factors contributing to the degradation of the signal which can impair the reliable recovery of encoded data. One source of degradation is called peak shifting. It is caused by overlapping pulses as well as pulse peak suppression which are consequences of the encoding scheme and the physical characteristics of the storage system, such as the magnetic storage media and the magnetic circuitry of read and write heads of disk drives. Peak shifting in particular can be predicted and partially corrected by write pre-compensation techniques. There is nevertheless a need to improve the reliability of data recovery irrespective of the presence or absence of write pre-compensation.

To take as an example the encoding technique of Modified Frequency Modulation (MFM), the characteristics of which are well-known: The rule is essentially to provide a signal such as a transition or pulse at the centre of the bit cell for a one or data bit, and a signal at the leading boundary of a bit cell for a zero or clock bit except immediately after the occurrence of a one bit. The object of the coding is to provide a minimum spacing between signals of at least a one bit cell timing unit to provide high storage density, and a maximum spacing between signals not greater than two bit cell timing units to preserve synchronization. Peak shift will generally tend to even out the resulting uneven signal spacing, but for accurate data recovery the peak shift of each bit should be no greater than one-quarter of one bit cell timing unit, otherwise sufficiently delayed clock pulses, say, would become indistinguishable from, perhaps advanced, data pulses, and vice versa.

Prior art data recovery techniques used in most known disc drive data storage systems and the like have involved fixing the framing window width and centering data signals and clock signals in the appropriate window by the use of a phase locked loop which locks onto incoming data bits and clock bits by adjusting its operating frequency via a feedback loop. Predictable shifts in data and clock bits have in the past been partially accounted for by write pre-compensation and read post-compensation whereby the bits themselves are advanced or delayed in order to ensure their falling within the standard frame windows during read out.

The present invention as claimed provides a method, and apparatus, to align the recovery windows with predicted positions of shifted signals such as data and clock bits, without altering the underlying synchronization frequency.

An article in Electronics, Vol. 52, No. 20, September 27, 1979, pages 127 and 129 represents an earlier attempt to solve this problem. That article relates specifically to the M²FM code and it modifies the data recovery windows in dependence on flux transitions in the previous two data recovery windows. The present invention, on the other hand, does not depend on the presence or absence of data bits in previous recovery windows, but on whether a pulse irrespective of whether it represents a data bit or a clock pulse, is delayed beyond the position at which it should have occurred.

According to the invention, the widths of e.g. the data recovery window and of its complementary clock recovery window are allowed to expand and to contract while the duration of the window pair remains essentially constant, to track and centre on time locations of expected occurrences of data and clock pulses, or like signals indicating state transitions, in order to compensate for the peak shift within of the serialized bit stream. Centering is based on knowledge of the characteristics of the encoding scheme and its the peak shift behaviour. More particularly, each valid signal is detected as belonging either to a first or to a second location in a bit cell and is then utilized as a time reference point for defining the commencement and duration of the current and of subsequent, data recovery of clock recovery windows. If, for example, the reference point is a bit signal which is delayed beyond a pre-selected time, the current data recovery window is expanded at its trailing edge and the adjacent clock recovery window i.e. the window sharing a common transition or edge, is compressed by generally the same amount at its leading edge. The leading edge of the subsequent data recovery window is then expanded on its leading edge if no valid signal occurs within a minimum period following a reference signal. If, on the other hand, the reference point is a clock signal which is delayed, then the current clock recovery window is expanded and the subsequent clock recovery window is modified according to the presence or absence of a transition at a predicted interval. The expansion and contraction of subsequent windows relative to a reference signal is a key means for limited timing compensation provided by the present invention, which does not affect the underlying synchronization of the system.

While the system has been explained above with reference to window pairs of data recovery and clock recovery windows, it will be apparent that the invention is keyed to occurrences of signal deviations as between intervals without reference to the position within each interval at which the reference signal should, in theory occur.

The following further description of the present invention by way of a specific example and with reference to the accompanying drawings, will aid a fuller understanding of the invention. Of the drawings:—

Figure 1 is a flow chart representing the method according to the invention;

Figure 2 is a block diagram of the invention;

Figure 3 comprises Figures 3A to 3F, of which:

Figure 3A is a timing diagram illustrating a non-return-to-zero (NRZ) code,

Figure 3B is a timing diagram of an equivalent, ideal modified frequency modulation (MFM) signal,

Figure 3C is a timing diagram of a prior art window signal,

Figure 3D is a timing diagram of a modified frequency modulation (MFM) signal with peak shifts,

Figure 3E is a timing diagram of a window signal generated according to the invention,

Figure 3F is a timing diagram of a bit cell timing unit to which the timing diagrams 3A—3E are nominally synchronized; and

Figure 4 is a detailed schematic block diagram of a specific circuit operating according to the invention.

The further explanation is in terms of a binary two level Modified Frequency Modulation (MFM) encoding scheme in which signals cannot occur more often than once per bit cell timing unit and in which a signal time shift is never greater than one-quarter of a bit cell timing unit. The first limitation is a function of the encoding scheme, while the second limitation is indicated by physical constraints of systems in which the encoding scheme is employed, such as in disc drive system utilizing magnetic media in connection with magnetic registration and detecting apparatus.

In carrying out the method, the windows of a window pair consisting of a data recovery window at one logic level and its complement, a clock recovery window at the opposite logic level, are narrowed and expanded in a complementary manner in order to effect modest shifts of the windows from nominally synchronized locations without modifying the underlying synchronization of the window pair, to extract data bits and clock bits from an encoded serialized bit stream. The method illustrated provides for determination of the direction and extent of expansion, contraction or apparent shift. Time of occurrence of information transitions is predicted, and predictive information is propagated. specifically, the method comprises two levels of decision relating to the timing of occurrences or non-occurrences of data bits or clock bits with reference to a position within the basic timing unit. The first level of decision is a prediction of the position of occurrence of a signal at one of the locations following the occurrence of a signal at the other one of the locations which is used as reference bit. As used herein, state amplitude deviation or signal refers to any pulse, transition or sensed level change signalling a bit value.

At the first decision level the recovery window for the reference bit itself is expanded on its trailing edge by a defined portion of a timing unit by borrowing an equal portion of a timing unit from the leading edge of the succeeding recovery window. Thereafter, the recovery window for the predicted signal is expanded a predetermined amount on its leading edge by borrowing an equivalent portion of the timing unit from the trailing edge of the immediately preceding recovery window of the same type. The effect is to expand, and in most cases to advance, that recovery window of the succeeding window pair for the duration of which there is a preliminary prediction of the occurrence of a valid signal. (These rules of operation should not be confused with the shifting of common edges or transitions of adjacent recovery windows of opposing types. Such shifting also occurs).

The second level of decision is a revised prediction of the position of occurrence of a subsequent signal in the event the previously predicted signal following the reference bit did not occur. In this second level of prediction, the next succeeding window following the window of predicted occurrence of a bit is advanced or expanded at its leading edge in the event a signal has not occurred during the first preducted window. If the last occurring signal in the prediction process is delayed, it becomes the reference bit for the immediately succeeding signal.

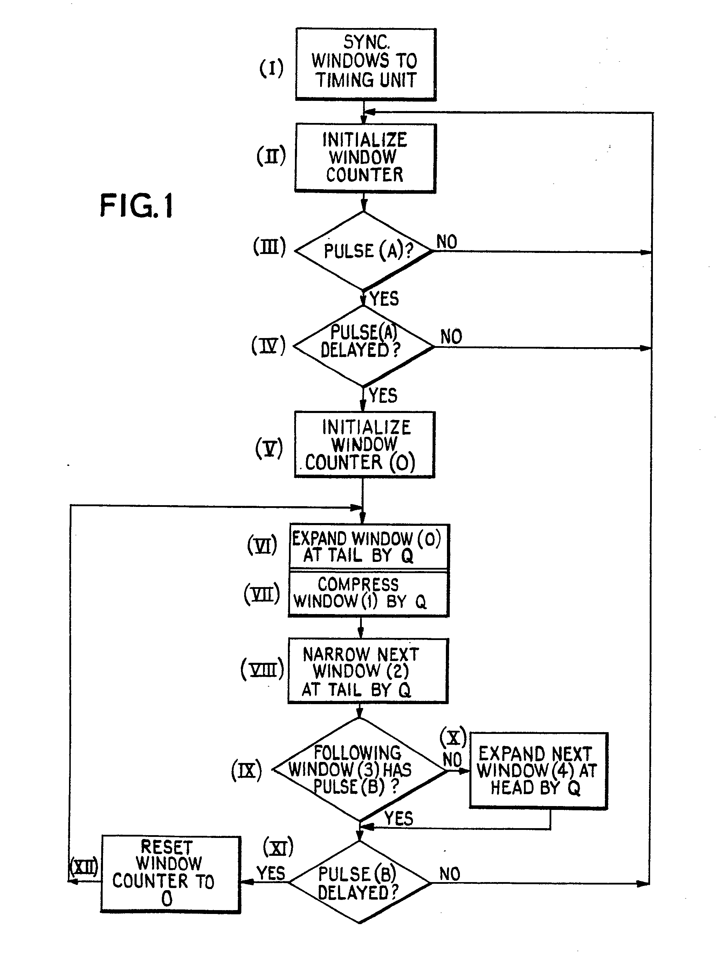

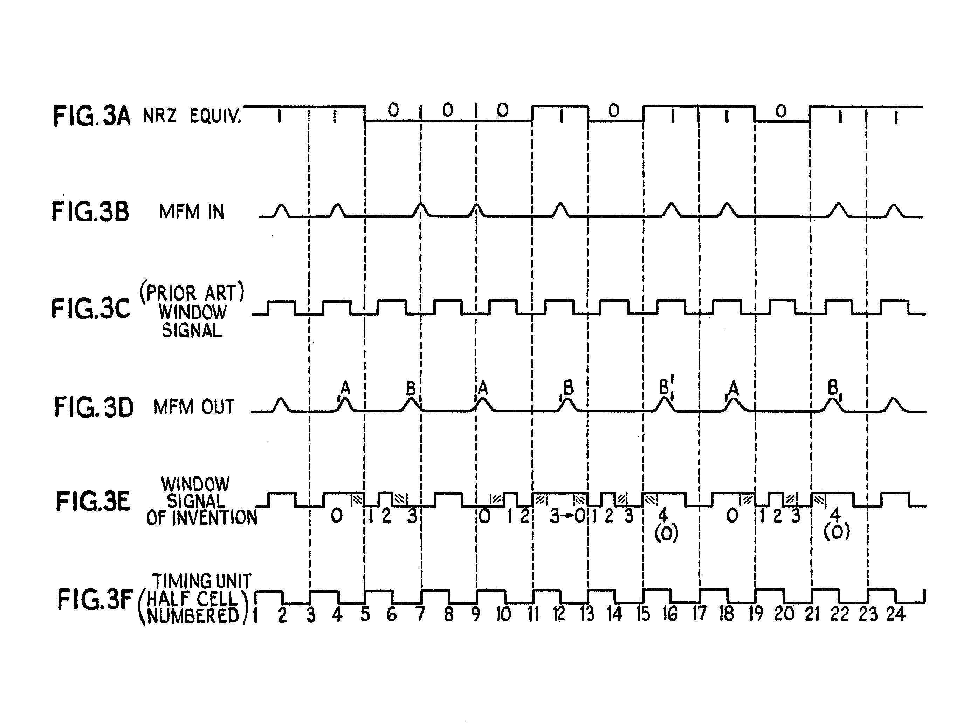

This method will be more easily understood by referring to the flow chart of Figure 1 taken in connection with the timing diagram of Figures 3A—3F.

Referring first to Figure 3F, the basic timing unit of the method according to the invention is illustrated. Each timing unit is subdivided into consecutively numbered subunits comprising one complete cycle. Two half cycles per timing unit are shown. However, to provide a convenient measure of the positions of the signals, the rate of the master clock may be chosen to provide a greater number, e.g. as many as thirty-two subunits per timing unit are employed in the specific embodiments described below. ·

To recall, the MFM encoding scheme is related to the timing unit in the following manner: state transitions, i.e. signals occurring at the centre of a bit cell timing unit represent data bits, while signals occuring at the edge of a bit cell timing unit represent clock bits. An equivalent non-return-to-zero (NRZ) code is shown in Figure 3A. Immediately thereunder in Figure 3B, aligned with the timing diagram of Figure 3F, is a representation of an ideal MFM signal in which data bits are centred precisely within their corresponding bit cell timing units, and clock bits are provided precisely at the edge of the bit cell timing units. Figure 3C illustrates a a prior art window signal in which window units, of equal length are synchronized precisely to the centre (for data windows) and precisely to the edge (for clock windows) of the timing unit. It will be noted that a data window, shown, as that portion of the cycle in a high state, invariably alternates with an equally long clock window, designated by a low state.

Figure 3D illustrates a more realistic MFM signal, as provided by a peripheral device such as the magnetic storage media of a disk drive. Selected signals of the MFM signal do not align precisely with the centre or edge of a corresponding bit cell timing unit. The amount of time deviation is illustrated by comparison of the shift of the peaks with respect to an index mark adjacent the peaks in Figure 3D. To a certain extent, the variations in alignment can be predicted; for example, each signal will generally exhibit a peak shift in the direction away from the nearest adjacent signal. Hence, a signal separated, say, from a preceding signal by one timing unit and a following signal by two timing units will exhibit a time shift in the direction of the following signal. The directon of peak shift of a given signal is thus dictated by the difference in separation from its adjacent signals. Signal shifts may be sufficiently great to cause ambiguity in the identity of the MFM signal when a prior art detection window system (Fig. 3C) is employed, since peak shifted signals may not always occur within the correct window signal of the prior art (Figs. 3C and 3D).

Figure 1 illustrates a flow chart of the steps necessary to obtain recovery window signals modified according to the invention (Fig. 3E). Referring to Figure 1, the first step, not in itself novel, is to synchronize windows to the centre of the bit cell timing unit (step I). This normally happens during the preamble field of a bit stream.

The invention is provided with a window counter which counts the number of actual window transitions since the occurrence of the last signal shifted so as to be delayed. Unless modified, two equally spaced window transitions will occur per timing unit. At the occurrence ofthe first delayed signal, the window counter is initialized (step II). Likewise, the window counter is thereafter initialized at each subsequent delayed signal.). The system is then prepared for the occurrence of the next shifted signal or, as hereinafter referred to, pulse, whether advanced or delayed.

In detail, when a pulse occurs (designated herein as first pulse or pulse A) (step III), it is tested to determine whether or not it is delayed relative to the centre of the recovery window (step IV). More specifically, it is tested to determine if it is delayed relative to the last, i.e. closest, timing unit half cell transition. If the pulse (A) is delayed, it becomes a reference pulse, and the window counter is initialized (step V). Each window is thereafter enumerated by the number of window transitions which have occurred since the previous pulse, without reference to the type of window. The current window (0) is expanded at its trailing edge by a predetermined time interval Q, typically about one-quarter timing unit (step VI). The time interval Q may be fixed, or it may be varied in accordance with the length of the measured pulse delay. The immediately succeeding window (1) of the opposite type is effectively compressed by the same amount (step VIII), since the state transition defining the common edge has been delayed.

The transition at the trailing edge of the next occurring window (2) is thereafter advanced causing the window (2) to be narrowed at its trailing edge by the amount Q (step VIII). Steps (VI) and (VIII), involving the shifting of transitions, together are equivalent to expanding one window by borrowing from a succeeding window, or, conversely, narrowing, the window immediately following the occurrence of a delayed pulse and augmenting the next window which is like the compressed window at its leading edge by an amount equal to that borrowed from the compressed window (step VII).

Thereafter a decision has to be taken based on the occurrence or non-occurrence of a pulse (B) in the following window (3) (step IX). If during the following window (3) there is no pulse (here the second pulse or pulse B), the encoding scheme dictates that the next window (4) must have a pulse. Therefore, the next window (4) is expanded at its leading edge by a predetermined amount, such as Q (step X), and the process goes on to the next step. If, on the other hand, the following window (3) has a pulse (B), then the pulse (B) is examined as the next step to determine if it is delayed (step XI). If the pulse (B) is not delayed, the entire process is restarted after initalizing the system conditions (step II). If, however, the pulse (B) is delayed, the window counter is reset (step XII), and the prediction process proceeds with a repeated expansion of the current window (step VI) and a narrowing of the next like window (step VIII) until a pulse occurs (step IX) which is not delayed (step XI).

As will be apparent, a delayed pulse becomes a reference for the possible occurrence of pulses during succeeding recovery windows of either type. Importantly, however, the reference pulse is not a source of synchronization of the recovery windows to the underlying timing unit.

The operation of the invention is illustrated as summarised in connection with Figure 1, is illustrated by Figure 3E in connection with Figures 3D and 3F. In the following discussion, the windows will be numbered from left to right by reference to the last MFM-pulse after which they appear, and the MFM-pulses will be identified by reference to the nearest half cell timing unit. For example, the second pulse occurs nearest timing unit TU4, and the window bracketing the second pulse is designated TU4-0.

Assuming that the windows have already been synchronized to the timing unit, and the counters have been initialized and incremented as appropriate, the first pulse to be sensed will occur during window TU2. Testing whether that pulse is delayed (step IV), it will be determined that no delay has occurred, the pulse will be accepted as a valid data bit, and the system will be reinitialized (step II). The next pulse (A) will be sensed nearest TU4, and it will be sensed as being delayed. Accordingly, the current window, i.e. window TU4-0, is expanded at its trailing edge (step VI), the window TU4-1 is compressed (step VII), and the window TU4-2 is narrowed at its trailing edge (step VIII). Thereupon a pulse (B) will be sensed near TU7 (step IX). The pulse (B) is ahead of its proper position at the cell boundary and hence is sensed as not delayed (step XI). Accordingly, the system is reinitialized (step II). The next pulse (A) is sensed at TU-9 during a clock recovery window. The pulse position is determined to be delayed (step IV). Hence the window TU9-0 is expanded at its trailing edge (step VI) and the window TU9-1 is correspondingly compressed (step VII), and the window TU9-2 is compressed at its trailing edge (step VIII). During the next window, TU9-3, a pulse (B) is sensed near TU12 (step IX). The pulse (B) is also sensed as being delayed (step XI). Hence, pulse (B) becomes a new reference pulse and the window counter is reset. The current window TU12-0 is then expanded on its trailing edge (step VI), window TU12-1 is compressed, (step VII), and the window TU12-2 is narrowed on its trailing edge (step VIII). No pulse (B) is sensed during window TU12-3 (step IX). According to the encoding scheme, a pulse (B') must now occur during the next window TU12-4. Accordingly, window TU12-4 is expanded at its leading edge to receive the pulse (B') (step X). Testing the pulse (B') for delay (step XI), none is sensed, so the system is reinitialized (step II). The system is then ready to examine the next pulse without any reference to previous pulses.

The next pulse (A) sensed occurs nearest TU18 (step IV). A delay is sensed (step IV), causing the current window TU18-0 to be expanded at its trailing edge (step VI), window TU18-1 to be compressed (step VII) and window TU18-2 to be narrowed at its trailing edge (step VIII). No pulse (B) is sensed during window TU18-3 (step IX), so the following window TU18-4 is expanded at its leading edge (step X), since a pulse (B) is predicted. The pulse (B) is not delayed (step XI), so the system once again reinitializes (step II) in expectation of a subsequent pulse without reference to any previous pulses.

The method according to the invention can be implemented in many ways, such as by random logic, by provision of a programmed microprocessor, or by provision of a table look-up scheme in connection with a sequential network.

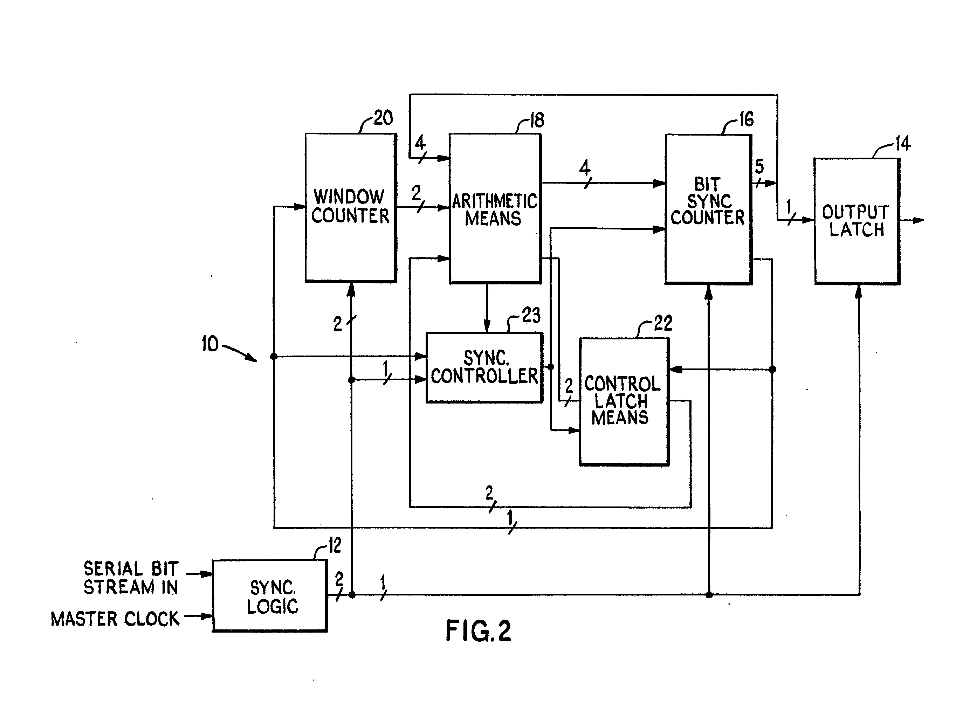

Figure 2 is a block diagram of a specific embodiment of a window control apparatus 10 according to the invention. The window control apparatus 10 comprises synchronization logic means 12 having as an input a serial bit stream, and a master clock signal, and as outputs control signal lines (including one for the master clock signal) to other elements in the system, such as, for example, an output latch 14. The output latch 14 provides the desired window signal based on an input which itself is an output signal of a bit position or bit synchronization counter 16. The bit synchronization counter 16 has an arithmetic output coupled to arithmetic means 18 and separate outputs to a window transition counter 20, to a control latch means 22, and to a synchronization controller 23.

The arithmetic means 18 has an arithmetic output coupled to the input of the bit synchronization counter 16, a control output coupled to synchronization controller 23, and a multistate control output coupled to the input of a control latch means 22, the output of which is coupled back into a multistate input of the arithmetic means 18. The synchronization controller 23 is operative to provide a basic count signal to the bit synchronization counter 16 and the control latch means 22 via its single output. Finally, the window counter 20 has outputs coupled to arithmetic inputs of the arithmetic means 18.

The window control apparatus 10 of Figure 2 generally operates as follows. A serial bit stream is received at the input of yhe synchronization logic 12. An output signal vndicating the initiation and time location of each input bit relative to an underlying timing unit is supplied to the window counter 20 and to the bit synchronization counter 16. The window counter 20 keeps track of the history of pulse separation, indicating whether the last previous pulse has occurred, 0, $\frac{1}{2}$, 1, or $1\frac{1}{2}$ timing units earlier. A two-bit binary output signal from the window counter 20 coupled to the arithmetic means 18 is sufficient to define the history of pulse separation. The master clock signal is coupled to counters 16 and 20 as well as to output latch 14 through the synchronization logic 12.

The bit synchronization counter 16 keeps track of the bit position within each timing unit. Upon receipt of an input synchronization signal from synchronization controller 23, the bit synchronization counter 16 measures the bit position relative to the current window. The output, a four-bit binary code, is supplied to the agithmetic means 18. Where the arithmetic means 18 is a ROM (Read Only Memory), the code is supplied as an address portion defined by the four-bit data value. The pre-selected contents of the address determined by this address value plus the remaining address bits supplied by the window counter 20 and the latch 22, are thereupon provided as output data for input to the bit synchronization counter 16 via a four-bit output bus. This preloads the bit synchronization counter 16 with a count so that the carry signal produced at the end of a counting cycle, causes the output latch 14 to change state with a corresponding delay or advance relative to the standard time of transition. The control latch means 22, in response to the output of the synchronization controller 23 and in connection with the output of the window counter 20, provides the remaining address bits to the arithmetic means 18.

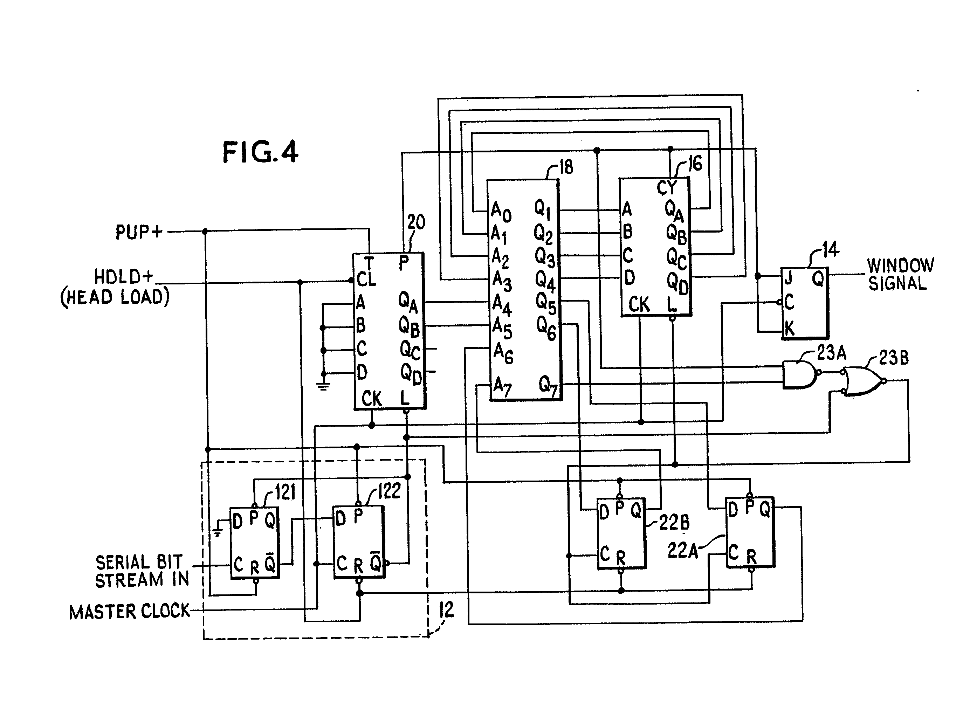

Referring now to Figure 4, a specific circuit operating according to the above described method is shown in block diagram form, wherein operative functions are implemented by encoding of solutions to defined input codes in a ROM. Numbers corresponding to the elements in Figure 2 are used in Figure 4. Specifically, the window counter 20 is a 74S161 synchronous binary counter with asynchronous clear. The bit synchronization counter 16 is also a type 74S161 counter. The ROM 18 is taken to be a type 74S471 256×8 programmable Read Only Memory, of which Table I is a memory map of a possible set of defined codes.

Control latch means 22 is assumed to comprise a type 74S74 dual D type flip-flop combination 22A and 22B. The synchronization logic means 12 comprises dual D-type flip-flops 121, 122, such as 74S74's. The synchronization controller 23 comprises gates 23A and 23B. The output latch 14 is taken to be a type 74S112 JK flip-flop.

The window counter 20 has its input terminals A, B, C, and D tied to ground, and its clear input CL coupled to an external control Headload (HDLD+), the signal of which indicates initialization or head load of a peripheral drive unit (not shown). The same control signal (HDLD+) is coupled to the reset terminals R of flip-flop 122, control latch 22A and control latch 22B. A pull up to positive voltage (generally plus five volts) signal PUP+ is connected to the T terminal of counter 20, the reset terminal R of latch 121, the preset terminal P of latch 122, and the preset terminals P of latches 22A and 22B. The input terminal P of counter 20 is connected to the carry output terminal CY of bit synchronization counter 16, to which both the J and K inputs of the output latch 14 and one input of dual input NAND gate 23A are also coupled. Data output terminals $Q_A$ and $Q_B$ of counter 20 are coupled to input bits $A_4$ and $A_5$ of ROM 18.

A 16 MHz master clock signal (which hoggles at a rate equal to 32 transitions per timing unit) is coupled ot the clock input C of flip-flop 122, the clock input CK of window counter 20, the clock input CK of bit synchronization counter 11,hand the clock input C of output latch 14.

The serialized bit stream input is received at the clock input terminal C of flip-flop 121, the D terminal being grounded. The $\overline{Q}$ output thereof is coupled to the D input of flip-flop 122. The $\overline{Q}$ output of flip-flop 122 is coupled to the P input of flip-flop 121, to the load input of window counter 20 and to one input of AND gate 23B (made with an OR function). All signals on this line are active in the LOW TRUE state.

The NAND gate 23A receives its second input from address $Q_7$ of ROM 18. The output of NAND gate 23A is applied to the other input of AND gate 23B, its input being enabled in the LOW TRUE state. The output of AND gate 23B is provided to the clock inputs C of the control latches 22A and 22B. Control latch 22A receives its D input signal from memory location $Q_5$ of ROM 18 and control latch 22B receives its D input from memory location $Q_6$ of ROM 18.

Output Q of control latch 22A is coupled to input location $A_6$ of ROM 18, and output Q of control latch 22B is coupled to input location $A_7$ or ROM 18.

Referring to the bit synchronization counter 16, output locations $Q_A$, $Q_B$, $Q_C$ and $Q_D$ are coupled to input locations $A_0$, $A_1$, $A_2$ and $A_3$ of ROM 18, and outputs $Q_1$, $Q_2$, $Q_3$ and $Q_4$ of ROM 18 are coupled to inputs A, B, C, and D of the bit synchronization counter 16.

The operation of the circuit of Figure 4 is as follows. Starting at a point following headload wherein the timing unit is synchronized to the recovery windows, and wherein the control latches 22A and 22B are not set, the occurrence of any input pulse causes the window counter 20 to reset to zero. In the meantime, the commencement of the input pulse is measured against a count stored in the synchronous counter 16. Each count represents one-thirtysecond of a cell timing unit. If the data pulse is not after the middle of the window by more than three counts, the system predicts that the next input will occur after one timing unit duration. (The number of counts is selected as a function of the peak shift characteristic of the memory device medium). As afore-said, the control latches 22A and 22B are not set initially. The outputs of the control latches 22A and 22B to the ROM 18 provide a code signalling the ROM 18 to load the bit synchronization counter 16 with the bit pattern for the value eight or one-half a window unit (this value is again dependent upon the physical device). The bit synchronization counter 16 then makes eight counts at the end of which the carry signal at the terminal CY causes the output of latch 14 to change state. The system then awaits the next input pulse. If however, the data pulse occurs after the predicted window, i.e., by an amount Q to the right of the window, a value of eight is then still loaded into the bit synchronization counter 16, which essentially shifts the trailing edge of the window by the same amount Q. The amount Q approximates the delay of the data pulse from the middle of the window.

If the input pulse is more than three counts delayed from the middle of the window, it is tested to determine if it is more than five counts to the right of the window. If not, control latch 22A is set. Thereafter, the synchronization counter 16 is again loaded with an eight count, and the window counter 20 is set to zero. The system predicts that the next input pulse will be at either $1\frac{1}{2}$ or 2 cell time units thereafter.

The bit synchronization counter 16 clocks from eight to fifteen and then recycles at zero producing a carry signal. The control latches A and B are then tested. If both are set, the bit synchronization counter 16 is loaded with the value six and the control latch 22B is reset. If only latch 22A is set, the synchronization counter 16 is loaded with the value three.

The window counter 20 is incremented, for example, from zero to one. The bit synchronization counter 16 then increments until it rolls over from fifteen to zero. The actual time of roll over will depend upon the preload value to the bit synchronization counter 16.

Once the bit synchronization counter 16 has rolled over, control latch A, being set, causes the bit synchronization counter 16 to be loaded with the value three in expectation that the next pulse input will occur $1\frac{1}{2}$ cell times units from the last input. The window counter 20 is then incremented again, that is, from one to two, and the bit synchronization counter 16 is incremented until it rolls over from fifteen to zero.

Upon roll over, with the window counter 20 having a value two and with the control latch 22A set, the bit synchronization counter 16 is loaded with zero. The window counter 20 is then incremented again to three in expectation of the next input pulse. The occurrence of an input pulse while the window counter 20 has the value three is a validation of the previous prediction that the pulse would occur at $1\frac{1}{2}$ cell time duration. Thereupon, the bit synchronization counter 16 is loaded from the ROM 18 with a value equal to fifteen plus a shifted window value less the last output value of the bit synchronization counter 16. A normal shifted window value is four counts, equivalent to one-quarter cell timing unit. At this point, the control latch 22A is still set. The window counter 20 is thereafter reset to zero.

The absence of the occurrence of input pulse during the period before the next carry signal to bit synchronization counter 16, that is, until it rolls over again to zero, corresponds to a prediction that the next input pulse will be, and indeed has to be, at two cell timing unit duration. The subsequent steps prepare and expand the next window.

The control latch 22A is set whereupon the bit synchronization counter 16 is loaded with zero. The window counter 20 is then incremented to four. Control latch 22A is still set. With occurrence of the next input data pulse the bit synchronization counter 16 is loaded with value fifteen less the shifted window value less the output value of the bit synchronization counter 16. The window counter 20 is then reset to zero.

With the control latch 22A set and the window counter 20 reset to zero, the input pulse is again tested. If its sensed value indicates the pulse position is delayed relative to the middle of the reference window by greater than one count, a new cycle is started with the control latch 22A set. The bit synchronization counter 16 is loaded with eight on the conditional prediction that the next input pulse will be at either $1\frac{1}{2}$ or two cell timing units duration.

If the sensed value of the pulse is not delayed by more than one count, control latch 22A is reset to zero, and a new cycle is started without prediction or reference to any previous pulse.

Suitably adapted, the foregoing explanation applies also to, for instance, FM in which data are represented as the presence or absence of signals at the centres of the bit cells, all of which contain clock signals at the boundary, and to others, such as the above-mentioned and like modulation techniques.

TABLE I
ROM Map

| Address (HEX) | Data (HEX) | Logic state (Fig. 3E) |
|---|---|---|
| 0—F | 08 08 08 08  08 08 08 08  08 08 08 18  18 38 38 40 | 0 |
| 10—1F | 08 08 08 08  08 08 08 08  08 08 08 08  08 08 08 40 | 1 |
| 20—2F | 08 08 08 08  08 08 08 08  08 08 08 18  18 38 38 40 | 2 |
| 30—3F | 08 08 08 08  08 08 08 08  08 08 08 08  08 08 08 40 | * |
| 40—4F | 08 08 08 08  08 08 08 08  08 08 08 08  08 08 08 53 | 0 |
| 50—5F | 08 08 08 08  08 08 08·08  08 08 08 08  08 08 08 53 | 1 |
| 60—6F | 08 08 08 08  08 08 08 08  08 08 08 08  08 08 08 50 | 2 |
| 70—7F | 08 08 08 08  08 08 08 08  08 08 08 18  18 38 38 50 | 3 |
| 80—8F | 08 08 08 08  08 08 08 08  08 08 08 08  08 08 08 40 | * |
| 90—9F | 08 08 08 08  08 08 08 08  08 08 08 08  08 08 08 40 | * |
| A0—AF | 08 08 08 08  08 08 08 08  08 08 08 08  08 08 08 40 | * |
| B0—BF | 08 08 08 08  08 08 08 08  08 08 08 08  08 08 08 40 | * |
| C0—CF | 08 08 08 08  08 08 08 08  08 08 08 08  08 08 08 56 | 0 |
| D0—DF | 08 08 08 08  08 08 08 08  08 08 08 08  08 08 08 53 | 1 |
| E0—EF | 08 08 08 08  08 08 08 08  08 08 08 08  08 08 08 50 | 2 |
| F0—FF | 08 08 08 08  08 08 08 08  08 08 08 18  18 38 38 50 | 3 |

Note: *=DON'T CARE STATES

## Claims

1. A method of recovering data from a serial signal stream divided into a sequence of bit cells each having two distinct locations at which a signal may occur, wherein respective recovery windows distinguish between signals which occur at the first and signals which occur at the second of these locations, the recovery windows being synchronised with the nominal bit cell rate and being capable of being varied to permit detection of signals at shifted positions, characterised in that whenever a pulse (A) is delayed the recovery window (0) in which it occurs is lengthened at its trailing edge, thereby shortening the first succeeding recovery window (1) and the second succeeding window (2) is further shortened by advancing its trailing edge, thus extending the third succeeding recovery window (3), whereby the total duration of the first two of said recovery windows (0, 1) and that of the second two (2, 3) remain essentially constant.

2. A method according to claim 1, wherein if there is no pulse (B) in said third succeeding extended recovery window (3), the trailing edge of that window (3) is advanced, thereby lengthening the next following recovery window (4).

3. A method of recovering data according to claim 1 or claim 2 wherein the recovery windows (0, 1, 2, 3, 4 . . .) form a sequence of complementary windows of equal duration, centred respectively about the centres of the first and second locations, in the absence of delayed signal pulses (A, B).

4. A data recovery method according to claim 3 in which the recovery windows, in the absence of a delayed pulse, each last for half a bit cell to recover data encoded in modified frequency modulation.

5. Data recovery apparatus arranged to carry out a method according to any of claims 1 to 4 including a recovery window generator (10), to recover data from a serial signal stream in which signals may occur at distinguishable first or second locations of a bit cell, characterised in that the recovery window generator (10) is synchronized to the bit cell rate and comprises a recirculating recovery window counter (20), a recirculating signal position counter (16), arithmetic means (18) whose outputs preload the signal position counter (16) in response to a combination of inputs received from the recovery window counter (20), from the signal position counter (16), and from a latching circuit (22) which receives as input selected outputs from the arithmetic means (18) and which operates to cause the arithmetic means (18) to modify the preload to the signal position counter (16) in accordance with previous outputs from the arithmetic means (18) and the signal position counter (16), and a window latching circuit (14) actuated on completion of counting cycles of the signal position counter (16) thereby to define the boundaries of the recovery windows.

6. Apparatus as claimed in claim 5, wherein the arithmetic means (18) comprises a memory addressed by combinations of output signals from the window counter (20), the signal position counter (16) and the latching circuit (22), with the signal position counter (16) being preloaded with the bit value stored at the address so selected.

7. Apparatus as claimed in claim 5 or claim 6 wherein the arithmetic means is a Read Only Memory (18) arranged to store selected address values such that an input address comprising a value equal to the delay in the completion of a counting cycle immediately following initialization, addresses a memory location whose contents operate to shorten the counting cycle for a subsequent window of the same type.

8. Apparatus as claimed in claim 7 wherein the input of selected further addresses to the Read Only Memory (18) provides output values which operate to expand a selected recovery window, occurring after a predetermined sequence of recovery windows subsequent to initialization, by advancing its leading boundary.

**Revendications**

1. Procédé de décodage de données à partir d'un train de signaux en série divisé en une séquence de cellules de bits ayant chacun deux emplacements distincts auxquels un signal peut apparaître dans lequel des fenêtres de décodage respectives font la distinction entre les signaux qui apparaissent au premier et les signaux qui apparaissent au second de ces emplacements, les fenêtres de décodage étant synchronisées à la fréquence nominale des cellules de bits et étant aptes à être variées pour permettre la détection des signaux à les positions décalés, caractérisé en ce que, à chaque fois qu'une impulsion (A) est retardée, la fenêtre de décodage (0) dans laquelle elle apparaît est allongée au niveau de son flanc descendant, raccourcissant de ce fait la première fenêtre de décodage suivante (1) et la seconde fenêtre suivante (2) est encore raccourcie en avançant son flanc descendant, allongeant de ce fait la troisième fenêtre de décodage suivante (3), de sorte que la durée totale des deux premières fenêtres de décodage (0, 1) et cell des deux secondes (2, 3) restent essentiellement constantes.

2. Procédé selon la revendication 1, caractérisé en ce que, s'il n'y a pas d'impulsion (B) dans ladite troisième fenêtre de décodage allongée suivante (3), le flanc descendant de cette fenêtre (3) est avancé, allongeant de ce fait la fenêtre de décodage suivante (4).

3. Procédé de décodage de données selon la revendication 1 ou la revendication 2, dans lequel les fenêtres de décodage (0, 1, 2, 3, 4 ...) constituent une séquence de fenêtres complémentaires de durée égale, centrées respectivement sur les centres des premier et second emplacements, en l'absence d'impulsions de signaux retardées (A, B).

4. Procédé de déodage de données selon la revendication 3, dans lequel les fenêtres de décodage, en l'absence d'une impulsion retardée, ont chacune une durée égale à une demi cellule de bits pour permettre de décoder des donées encodées en modulation de fréquence modifiée.

5. Dispositif de décodage de données pour la mise en oeuvre d'un procédé selon l'une quelconque des revendications 1 à 4, comprenant un générateur de fenêtres de décodage (10) pour décoder des données à partir d'un train de signaux en série dans lequel des signaux peuvent apparaître à des premier ou second emplacements pouvant être distingués d'une cellule de bits, caractérisé en ce que le générateur de fenêtres de décodage (10) est synchronisé sur la fréquence des cellules de bits et comprend un compteur de fenêtres de décodage recirculant (20), un compteur de positions de signaux recirculant (16), des moyens arithmètiques (18) dont les sorties préchargent le compteur de positions de signaux (16) en réponse à une combinaison d'entrées reçues du compteur de fenêtres de décodage (20), du compteur de positions de signaux (16) et d'un circuit basculeur (22) qui reçoit en entrée des sorties sélectionnées des moyens arithmétiques (18) et dont la fonction est de faire en sorte que les moyens arithmétiques (18) modifient la précharge appliquée au compteur de positions de signaux (16) informément aux sorties précédentes provenant des moyens arithmétiques (18) et due compteur de positions de signaux (16), et un circuit basculeur de fenêtres (14) actionné lors de l'achèvement des cycles de comptage du compteur de positions de signaux (16) afin de définir les limites des fenêtres de décodage.

6. Dispositif selon la revendication 5, dans lequel les moyens arithmétiques (18) comprennent une mémoire adressée par des combinaisons de signaux de sortie provenant du compteur de fenêtres (20), du compteur de positions de signaux (16) et du circuit basculeur (22), le compteur de positions de signaux (16) étant préchargé de la valeur des bits stockée à l'adresse ainsi sélectionnée.

7. Dispositif selon la revendication 5 ou la revendication 6 dans lequel les moyens arithmétiques sont constitués d'une mémoire morte (18) apte à stocker des valeurs d'adresses sélectionnées de sorte qu'une adresse d'entrée comprenant une valeur égale au retard à la fin d'un cycle de comptage suivant immédiatement l'initialisation, adresse un emplacement de mémoire dont le contenu a pour fonction de raccourcir le cycle de comptage d'une fenêtre ultérieure de même type.

8. Dispositif selon la revendication 7, dans lequel l'application d'autres adresses sélectionnées sur l'entrée de la mémoire morte (18) fournit des valeurs de sortie dont la fonction est d'opérer une expansion d'une fenêtre de décodage sélectionnée, après une séquence prédéterminée de fenêtres de décodage suivant l'initialisation, en avançant sa limite avant.

**Patentansprüche**

1. Verfahren zur Wiedergewinnung von Daten aus einem Fluß hintereinander liegender Signale, der in eine Folge von Bitzellen unterteilt ist, die je zwei unterschiedliche Plätze aufweisen, an denen ein Signal auftreten kann, bei dem entsprechende Wiedergewinnungs-Zwischenräume zwischen am ersten Platz auftretenden Signalen und am zweiten Platz auftretenden Signalen unterscheiden, wobei die Wiedergewinnungs-Zwischenräume mit der normalen Bitzellenrate synchronisiert werden und derart abgeändert werden können, daß Signale in verschobenen Positionen wahrgenommen werden können, dadurch gekenzeichnet, daß bie einer Verzögerung eines Impulses (A) der Wiedergewinnungs-Zwischenraum (0), in dem er auftritt, an seiner Rückflanke verlängert und dadurch der erste nachfolgende Wiedergewinnungs-Zwischenraum (1) verkürzt wird und der zweite nachfolgende Wiedergewinnungs-Zwischenraum (2) weiter durch Vorschieben seiner Rückflanke verkürzt und somit der dritte nachfolgende Wiedergewinnungs-Zwischenraum (3) ausgedehnt wird, so daß die Gesamtdauer der beiden ersten Wiedergewinnungs-Zwischenräume (0, 1) und die der beiden zweiten Wiedergewinnungs-Zwischenräume (2, 3) im wesentlichen konstant bleibt.

2. Verfahren gemäß Anspruch 1, bei dem im Falle des Ausbleibens eines Impulses (B) in dem dritten nachfolgenden, ausgedehnten Wiedergewinnungs-Zwischenraum (3) die Rückflanke dieses Zwischenraumes (3) vorgeschoben und dadurch der nächstfolgende Wiedergewinnungs-Zwischenraum (4) verlängert wird.

3. Verfahren zur Wiedergewinnungs von Daten gemäß Anspruch 1 oder Anspruch 2, bei dem die Wiedergewinnungs-Zwischenräume (0, 1, 2, 3, 4 ...) eine Folge komplementärer Zwischenräume von gleicher Dauer bilden, die in Abwesenheit verzögerter Signalimpulse (A, B) jeweils um die Mitte des ersten und zweiten Platzes zentriert sind.

4. Datenwiedergewinnungs-Verfahren gemäß Anspruch 3, bei dem beim Ausbleiben eines verzögerten Impulses die Wiedergewinnungs-Zwischenräume jeweils eine halbe Bitzelle andauern, um die bei einer abgeänderten Frequenzmodulation codierten Daten wiederzugewinnen.

5. Datenwiedergewinnungs-Einrichtung zur Ausführung eines Verfahrens gemäß einem der Ansprüche 1 bis 4 mit einem Wiedergewinnungszwischenraum-Generator (10), um Daten aus einem Fluß hintereinander liegender Signale Wiederzugewinnen in dem Signale an einem ersten oder zweiten unterschiedbaren Platz einer Bitzelle auftreten können, dadurch gekennzeichnet, daß der Wiedergewinnungszwischenraum - Generator (10) mit der Bitzellenrate synchronisiert wird und einen wiederholt umlaufenden Widergewinnungs-Zwischenraumzähler (20), einen widerholt umlaufenden Signalpositionszähler (16) und einen Rechner (18) enthält, dessen Ausgangssignale den Signalpositionszähler (16) in Abhängigkeit von einer Kombination aus Eingangssignalen im voraus beladen, die aus dem Wiedergewinnungs-Zwischenraumzähler (20), aus dem Signalpositionszähler (16) und aus einer Halteschaltung (22) empfangen sind, die als Eingangssignale gewählte Ausgangssignale aus dem Rechner (18) aufnimmt und derart arbeitet, daß der Rechner (18) zur Abänderung der Vorbeladung des Signalpositionszählers (16) entsprechend vorausgegangener Ausgangssignale aus dem Rechner (18) und dem Signalpositionszähler (16) veranlaßt wird, und eine Zwishenraum-Halteschaltung (14) aufweist, die am Ende von Zählzyklen des Signalpositionszählers (16) betätigt wird, um dadurch die Grenzen der Wiedergewinnungs-Zwischenräume festzulegen.

6. Einrichtung, wie im Anspruch 5 beansprucht, bei der der Rechner (18) einen Speicher enthält, der von Kombinationen der Ausgangssignale aus dem Zwischenraumzähler (20), dem Signalpositionszähler (16) und der Halteschaltung (22) adressiert wird, wobei der Signalpositionszähler (16) mit dem Bitwert im voraus beladen wird, der bei der so gewählten Adresse gespeichert ist.

7. Einrichtung, wie in Anspruch 5 oder Anspruch 5 beansprucht, bei der der Rechner ein nur dem Lesen dienender Speicher (18) zum Speichern gewählter Adressenwerte ist, so daß eine Eingangsadresse mit einem Wert gleich der Verzögerung am Ende eines Zählzyklus, der unmittelbar der Ingangsetzung folgt, einen Speicherplatz adressiert, dessen Inhalt eine Verkürzung des Zählzylkus während eines nachfolgenden Zwischenraumes derselben Art bewirkt.

8. Einrichtung, wie im Anspruch 7 beansprucht, bei der der Eingang gewählter weiterer Adressen zu dem nur dem Lesen dienenden Speicher (18) Ausgangswerte liefert, von denen ein gewählter Wiedergewinnungs-Zwischenraum, der nach einer vorbestimmten Folge von Wiedergewinnungs-Zwischenräumen unmittelbar nach der Ingangsetzung auftritt, durch Vorschieben seiner vorderen Grenze ausgedehnt wird.

# FIG.1

(I) SYNC. WINDOWS TO TIMING UNIT

(II) INITIALIZE WINDOW COUNTER

(III) PULSE (A)? — NO

YES

(IV) PULSE(A) DELAYED? — NO

YES

(V) INITIALIZE WINDOW COUNTER (0)

(VI) EXPAND WINDOW (0) AT TAIL BY Q

(VII) COMPRESS WINDOW(1) BY Q

(VIII) NARROW NEXT WINDOW (2) AT TAIL BY Q

(IX) FOLLOWING WINDOW(3) HAS PULSE (B)?

(X) NO — EXPAND NEXT WINDOW(4) AT HEAD BY Q

YES

(XI) PULSE (B) DELAYED? — NO

YES

(XII) RESET WINDOW COUNTER TO 0

1

FIG.2

FIG.3A  NRZ EQUIV.

FIG.3B  MFM IN

FIG.3C  (PRIOR ART) WINDOW SIGNAL

FIG.3D  MFM OUT

FIG.3E  WINDOW SIGNAL OF INVENTION

FIG.3F  (TIMING UNIT (HALF CELL) NUMBERED)

0 034 055

FIG.4

PUP+

HDLD+
(HEAD LOAD)

SERIAL BIT
STREAM IN

MASTER CLOCK

WINDOW
SIGNAL

0 034 055